# EUROPEAN PATENT APPLICATION

(11) **EP 3 404 592 A1**
(43) Date of publication of application: **21.11.2018**
(21) Application number: 18171717.4
(22) Date of filing: 10.05.2018
(51) Int. Cl.: G06Q 10/06, G06Q 50/30, G08G 5/00

(54) **SYSTEM AND METHOD FOR DETERMINING AN ACTUAL COST INDEX FOR AIRCRAFT OPERATIONS**

(30) Priority: 17.05.2017 IN 201711017381; 29.08.2017 US 201715689870
(71) Applicant: Honeywell International Inc., Morris Plains, NJ New Jersey 07950 (US)
(72) Inventor: KHA N, Kalimulla, Morris Plains, NJ New Jersey 07950 (US); JAYATHIRTHA, Srihari, Morris Plains, NJ New Jersey 07950 (US); KIROV, Chavdar, Morris Plains, NJ New Jersey 07950 (US); S., Visakh, Morris Plains, NJ New Jersey 07950 (US); YASHODHAR, Veeralla Sai V., Morris Plains, NJ New Jersey 07950 (US)
(74) Representative: Houghton, Mark Phillip

(57) **Abstract**

A method is provided for calculating an actual cost index (CI) for aircraft operations. A preliminary CI is generated for an aircraft based on in-flight data parameters. An actual CI is calculated by identifying unavoidable deviations from the flight plan and discounting the deviations from the preliminary CI. Also, an expected CI for the flight plan of the aircraft is generated based on the book performance data of the aircraft provided by the original equipment manufacturer (OEM). The actual CI is then compared with the expected CI with any differences between the two indices reported in a post flight compliance report.

## Description

### CROSS REFERENCE TO RELATED APPLICATIONS

This application claims priority to Indian Provisional Patent Application No. 201711017381, titled "System and Method for Determining an Accurate Cost Index for Aircraft Operations" that was filed on 17 May 2017.

### TECHNICAL FIELD

The present invention generally relates to aircraft operations, and more particularly relates to determining an actual cost index for aircraft operations.

### BACKGROUND

Fuel usage is a significant cost for aircraft operation. Consequently, optimization of fuel usage for airlines is a priority. A standard metric for measuring the efficiency of aircraft operations is a "cost index" or "CI" which is the ratio of the unit cost of time to the unit cost of fuel. Airlines typically spend significant effort to compute the CI to be used for a particular flight based on fuel and time related operating costs such as wages, equipment lease costs, maintenance costs, etc., but existing calculation mechanisms can only provide an estimated cost index. Hence, there is a need for a system and method for determining an actual cost index for aircraft operations in an actual and efficient manner.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for calculating an actual cost index (CI) for aircraft operations. The method comprises: generating a preliminary CI for an aircraft using a cost index utility engine, where the preliminary CI is based on in-flight data parameters that are collected by a flight data collection system located on board the aircraft; identifying unavoidable deviations from the flight plan during the flight of the aircraft; calculating an actual CI for the flight of the aircraft using the cost index utility engine, where the actual CI is calculated by discounting the unavoidable deviations from the flight plan; generating an expected CI for the flight of the aircraft using the cost index utility engine, where the expected CI is based on book performance data for the aircraft provided by an original equipment manufacturer (OEM); comparing the actual CI with the expected CI and calculating any differences between the actual CI and expected CI; and preparing a post-flight compliance report of the differences between the actual CI and expected CI.

A system is provided for calculating an actual cost index (CI) for aircraft operations. The apparatus comprises a flight data collection system located on board an aircraft that collects real time in-flight data parameters; a cost index utility engine that receives the in-flight data parameters from the flight data collection system and calculates, a preliminary CI for the aircraft based on the in-flight data parameters of the aircraft, an actual CI by discounting any unavoidable deviations from the flight plan for the aircraft, and an expected CI based on the flight plan for the aircraft and book level performance data for the aircraft provided by an original equipment manufacturer (OEM); and a compliance report generator that compares the actual CI with the expected CI and generates a compliance report of key performance indicators (KPI) and any differences between the actual CI and the expected CI.

Furthermore, other desirable features and characteristics of the [system/method] will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of a system for determining an actual cost index for aircraft operations in accordance with one embodiment; and
FIG.2 shows a flowchart of a method for determining an actual cost index for aircraft operations in accordance with one embodiment you.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A system and method for determining an actual CI for aircraft operations has been developed. Embodiments compute the actual CI of a flight and compare it to an expected CI to determine an actual CI for an aircraft. First, a "preliminary CI" is calculated using flight data parameters of the aircraft and an operational flight plan (OFP) for the aircraft. Unavoidable deviations from the flight plan that affect the preliminary CI are identified and discounted in order to calculate an "actual CI" for the flight. Performance data is retrieved from the manufacturer of the aircraft and is used to calculate a "expected CI" for the same flight. The actual CI is then compared with the expected CI and any differences are noted in a post flight compliance report.

The cost index compliance reports of any differences between expected CIs and actual CIs are provided to the operator and may be broken out by specific aircraft, specific fleet, a specific geographic sector, a specific route, or an individual crew. A segment by segment breakout of the actual cost index along a flight path may also be generated with detailed analysis with respect to deviations from an OFP along with the reasons for any deviations and any corresponding mitigations.

Various embodiments of the method calculate the actual CI of the flight using flight data parameters. This involves correlating the actual speed and altitude profile of the flight, environmental and weather conditions, fuel weight, and any other performance factors against the book level performance data of the aircraft as provided by the original equipment manufacturer (OEM). OEM performance tools are used to generate book level climb/cruise/dissent speed profiles of the aircraft under various conditions. This advanced data generates a multidimensional dataset that reflects the relationship between the flight data parameters.

A cost index utility calculation engine may compute the CI by utilizing the flight data parameters at any instant of the flight and correlating those parameters with the multidimensional dataset. In this embodiment, the CI is generated by analyzing a snapshot of flight data parameters at various points during the flight using flight data parameters such as speed, altitude, wind speed, etc. This real-time computation of the CI using flight data parameters may be displayed for the aircrew in comparison with the planned CI. The aircrew can access the real-time snapshot of the CI continually which may also include cues on how to mitigate any deviation from the planned CI.

The actual CI is discounted for unavoidable deviations from the flight plan such as: Air Traffic Control (ATC) speed/altitude commands, Air Navigation Service Provider (ANSP) speed regulations, vectoring, crew overrides, gate delays, weather, etc. In typical operations, a flight is expected to be cleared to fly and gate times are synced up as calculated according to the CI. How just ever, due to the dynamic nature of air traffic and weather there will almost certainly be unavoidable deviations from the CI. In some embodiments, the source of the deviation is identified to include speed changes as dictated by ATC, air traffic\gate delays, and any other operational constraints. Additionally, embodiments may also access navigational or other flight databases where procedural and zonal constraints are predefined and compliance according to a specified CI is not possible. Additionally, some embodiments would also identify deviations due to onboard equipment failures and similar situations.

During post flight analysis, data from an onboard "flight data collection system" may be analyzed for quality checks, smoothing of flight data parameters, flight phase detection and other co-related parameters. An onboard flight data collection system may gather flight data from aircraft from several different units on board the aircraft including: a quick access recorder (QAR); a digital flight data recorder (DFDR); a digital flight data acquisition unit (DFDAU); etc. The flight data collection system data along with the speed, altitude, wind, temperature and fuel weight at various instances of the flight are used by the calculation engine. Embodiments of the method may compute the actual CI at predetermined periodic instances along the flight as well it is at various points of interest such as flight level changes, speed changes, waypoints, etc. In other embodiments, the method of calculating the actual CI may be applied in real time aboard the aircraft. This provides the actual in-flight CI to the flight crew based on current flight data parameters. The crew will be aided in identifying any deviations from the expected CI and provided with advisories to overcome the deviations.

Various reports may be calculated and generated post flight to show the comparison of the expected and actual CI. These reports can be further broken down into various phases of the flight or aggregated in the form of a cost index compliance report by the aircraft type, the fleet of aircraft, or the sector. The information in these reports may be used for identifying any inefficiencies in route planning, schedules, crew training, etc. The information may also be used to recommend appropriate corrective actions based on practical problems and actual performance of the aircraft.

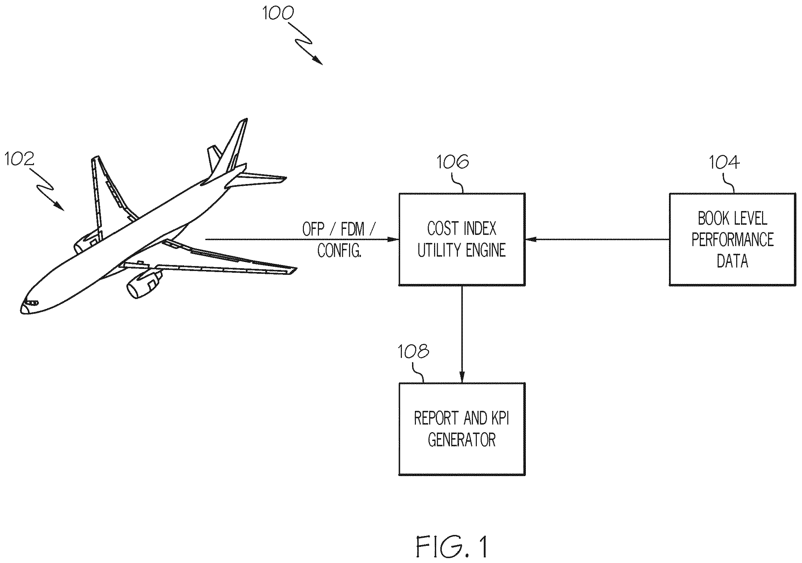

With reference to FIG. 1, a block diagram of a system for determining an actual cost index 100 in accordance with one embodiment is shown. In this example, specific data is retrieved from the aircraft 102 and provided to a cost index utility calculation engine 106. The data from the aircraft may include the operational flight plan (OFP), the flight data collection system data, specific aircraft configuration data, etc. Book level performance data 104 is also retrieved and provided to the cost index utility calculation engine 106. The book level performance data 104 reflects the performance characteristics of the specific aircraft configuration as provided by the OEM. The cost index utility calculation engine 106 utilizes flight efficiency software to generate an expected CI and the actual CI. The expected and actual indexes are compared by a report and key performance indicator (KPI) generator 108 that provides cost index compliance reports for the operator.

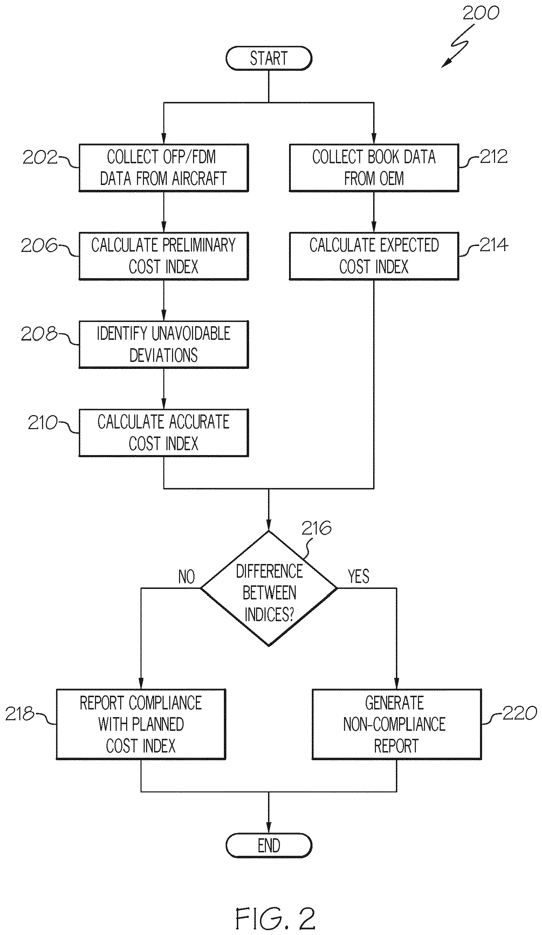

With reference to FIG. 2, a flowchart of a method for determining an actual cost index 200 in accordance with one embodiment is shown. First, an OFP along with flight data collection system data from an in-flight aircraft is collected 202 and used to calculate a preliminary CI 206. Unavoidable deviations from the OFP are identified 208 and discounted from the preliminary CI to calculate the actual CI for the aircraft 210. Additionally, book data for the aircraft from the OEM is collected 212 and used to calculate an expected CI 214. The actual CI is compared with the expected CI 216. If the differences between the two Cis are negligible, a report is generated of aircraft compliance with the expected CI 218. However, any differences between the two CIs is reported in a non-compliance report 220.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for calculating an actual cost index (CI) for aircraft operations, comprising:
generating a preliminary CI for an aircraft using a cost index utility engine, where the preliminary CI is based on in-flight data parameters that are collected by a flight data collection system located on board the aircraft;
identifying unavoidable deviations from the flight plan during the flight of the aircraft;
calculating an actual CI for the flight of the aircraft using the cost index utility engine, where the actual CI is calculated by discounting the unavoidable deviations from the flight plan;
generating an expected CI for the flight of the aircraft using the cost index utility engine, where the expected CI is based on book performance data for the aircraft provided by an original equipment manufacturer (OEM);
comparing the actual CI with the expected CI and calculating any differences between the actual CI and expected CI; and
preparing a post-flight compliance report of the differences between the actual CI and expected CI.

2. The method of Claim 1, where the actual CI is calculated for a specific aircraft.

3. The method of Claim 1, where the actual CI is calculated for a specific fleet of aircraft.

4. The method of Claim 1, where the actual CI is calculated for a specific aircrew.

5. The method of Claim 1, where the actual CI is calculated for a specific geographic sector.

6. The method of Claim 1, where the actual CI is calculated for a specific route.

7. The method of Claim 1, where the actual CI is calculated in real time during the flight of the aircraft.

8. The method of Claim 1, where the actual CI is calculated post-flight of the aircraft.

9. The method of Claim 1, where the unavoidable deviations from the flight plan comprise air traffic control (ATC) commands.

10. The method of Claim 1, where the unavoidable deviations from the flight plan comprise vectoring instructions.

11. The method of Claim 1, where the unavoidable deviations from the flight plan comprise gate delays.

12. The method of Claim 1, where the unavoidable deviations from the flight plan comprise weather conditions.

13. The method of Claim 1, where the book performance data of the aircraft comprise climb, cruise and dissent profiles of the aircraft.

14. A system for calculating an actual cost index (CI) for aircraft operations, comprising:
a flight data collection system located on board an aircraft that collects real time in-flight data parameters;
a cost index utility engine that receives the in-flight data parameters from the flight data collection system and calculates,
a preliminary CI for the aircraft based on the in-flight data parameters of the aircraft,
an actual CI by discounting any unavoidable deviations from the flight plan for the aircraft, and
an expected CI based on the flight plan for the aircraft and book level performance data for the aircraft provided by an original equipment manufacturer (OEM); and
a compliance report generator that compares the actual CI with the expected CI and generates a compliance report of key performance indicators (KPI) and any differences between the actual CI and the expected CI.
